Europäisches Patentamt

European Patent Office

Office européen des brevets

(19)

(11) **EP 0 885 648 B1**

(12) **EUROPEAN PATENT SPECIFICATION**

(45) Date of publication and mention
of the grant of the patent:
**07.01.2004 Bulletin 2004/02**

(51) Int Cl.⁷: **B01D 53/86**, A62D 3/00

(21) Application number: **98110080.3**

(22) Date of filing: **03.06.1998**

(54) **A treatment method for decomposing fluorine compounds, and apparatus and use of a catalyst therefor**

Verfahren, Vorrichtung und Verwendung eines Katalysators zur Zersetzung fluorierter Verbindungen

Procédé, dispositif et utilisation d'un catalyseur pour la décomposition de composés fluorés

(84) Designated Contracting States:
**DE FR NL**

(30) Priority: **20.06.1997 JP 16371797**

(43) Date of publication of application:
**23.12.1998 Bulletin 1998/52**

(60) Divisional application:
**03009193.8 / 1 340 533**

(73) Proprietor: **Hitachi, Ltd.**
**Chiyoda-ku, Tokyo 101-8010 (JP)**

(72) Inventors:
• **Kanno, Shuichi**
**Hitachi-shi, Ibaraki 319-1225 (JP)**
• **Ikeda, Shinzou**
**Naka-gun, Ibaraki 319-1114 (JP)**
• **Yasuda, Ken**
**Nerima-ku, Tokyo 177-0033 (JP)**
• **Yamashita, Hisao**
**Hitachi-shi, Ibaraki 316-0011 (JP)**
• **Azuhata, Shigeru**
**Hitachi-shi, Ibaraki 319-1225 (JP)**
• **Tamata, Shin**
**Higashiibaraki-gun, Ibaraki 311-1301 (JP)**
• **Irie, Kazuyoshi**
**Hitachi-shi, Ibaraki 317-0077 (JP)**

(74) Representative: **Strehl Schübel-Hopf & Partner**
**Maximilianstrasse 54**
**80538 München (DE)**

(56) References cited:
EP-A- 0 412 456      EP-A- 0 597 393
EP-A- 0 642 809      WO-A-97/49479
DE-A- 4 311 061

• DATABASE WPI Section Ch, Week 8802 Derwent
Publications Ltd., London, GB; Class E36, AN
88-010405 XP002078730 & JP 62 273 039 A
(KANTO DENKA KOGYO KK)

**Description**

BACKGROUND OF THE INVENTION

The present invention relates to a treatment method for decomposing halogen compounds containing,only fluorine as the halogen such as $CF_4$, $C_2F_6$, $SF_6$, $NF_3$, and the like at a low temperature effectively, and a catalyst and an apparatus therefor.

A large amount of halogen compound gas containing only fluorine as the halogen such as $CF_4$, $C_2F_6$, $SF_6$, $NF_3$, are used as a semiconductor etching agent, a semiconductor cleaner, and the like. However, it was found that these compounds, once discharged into the atmosphere, turn into warming substances causing global warming.

Gases such as $CF_4$, $C_2F_6$, $SF_6$, $NF_3$, contain a large amount of fluorine (F) as one of molecular composing elements. Fluorine has the highest electronegativity among all the chemical elements, and forms chemically very stable compounds.

Particularly, $CF_4$, $C_2F_6$, and the like are substances having a strong intramolecular force, and a poor reactivity. Based on the above property, when $CF_4$ is decomposed by combustion, heating up to a high temperature is required, and a remarkably large amount of energy is consumed.

Furthermore, a corrosion velocity of materials in the apparatus for the decomposition reaction at a high temperature by the generated gases such as hydrogen fluoride and the like is large, and no adequate method for decomposing treatment has been proposed yet at present.

One of the methods for decomposing treatment being proposed at present is technology for combustion at a high temperature. However, in accordance with the proposed method, a large amount of $CO_2$ and $NO_x$ , i.e. hazardous substances, are generated by combustion, because combustible gases such as propane gas and the like are used. Due to use of flammable gases such as propane and the like, a danger of explosion is existed. Furthermore, due to combustion at approximately 1000 °C, oven wall material is damaged by corrosive gases generated by the decomposition of halogen compounds, and an operation cost is increased because frequent maintenance is required. Accordingly, technology to decompose the halogen compounds at a low temperature without generating hazardous substance is necessary.

Although various applications regarding the catalysts for decomposing halogen compounds have been filed, any report on decomposition of halogen compounds containing only fluorine as the halogen has not been disclosed. Although a method for hydrolyzing halogen compounds with a catalyst comprising titania has been disclosed in JP-A-3-66388 (1991), it is described that the method does not indicate any decomposing performance for $CF_4$, which contains only fluorine as the halogen. Okazaki et al intended to hydrolyze CFC-14($CF_4$) using $Fe_2O_3$/active carbon, but the compound was not decomposed as described in Chem. Lett. (1989) pp. 1901-1904. Regarding the decomposition of halogen compounds containing only fluorine as the halogen, JP-A-7-116466 (1995) disclosed an example using a decomposing agent comprising an inorganic oxide treated with hydrogen fluoride.

WO 97/49479 (prior art under Art. 54(3) and (4) EPC) relates to a method for removing fluorinated compounds from a gas stream through an aluminium oxide adsorber. The gas stream and the aluminium oxide are dry. The fluorine from the fluorinated compound is chemically bound to the aluminium oxide adsorber.

Similar methods for adsorbing fluorine from $NF_3$ in a dry environment by means of aluminium oxide, silicon oxide, kieselguhr or zeolite or a zirconium group alloy are disclosed in DE-A-43 11 061, JP-A-62-27039 and EP-A-0 597 393.

EP-A-0 412 456 discloses a process for catalytic decomposition of chlorofluoro-alkanes by a catalyst comprising alumina or alumina-silica complex oxide in the presence of steam at high temperature. Similarly, EP-A-0 642 809 discloses a process for decomposing halogenated hydrocarbons such as atrazine or melamine-formaldehyde resins by an aluminium containing catalyst in the presence of water. Both these documents do not relate to the decomposition of perfluoro compounds.

SUMMARY OF THE INVENTION

It is an object of the invention to provide a method for decomposing fluorine compounds containing only fluorine as a halogen, such as $CF_4$, $C_2F_6$, $SF_6$, $NF_3$ and the like.

This object is solved by the method of claim 1. The subclaims relate to preferred embodiments of the invention. Claims 13 and 14 relate to the use of a catalyst and 70 an apparatus for carrying out the method of the invention.

Embodiments of the present invention provide a method for treating fluorine compounds at a low temperature effectively and with catalysts having a high decomposition rate and a long catalytic life.

The inventors have achieved the present invention by proceeding an investigation in detail on a method for decomposition treatment, which is capable of decomposing compounds containing only fluorine as the halogen such as $CF_4$, $C_2F_6$, $SF_6$, $NF_3$, and the like at a low temperature with a high efficiency, and of suppressing corrosion of the apparatus caused by corrosive gases in the decomposed gas.

The inventors found that a compound containing only fluorine as halogen, the compound being composed of the fluorine with any element selected from the group consisting of carbon, sulfur, and nitrogen, could be hydrolyzed and the fluorine compound in a gas flow could be converted to hydrogen fluoride by contacting the gas flow containing the fluorine compound with a catalyst comprising Al in the presence of steam at a temperature in the range of approximately 200 - 800 °C.

The object gas, i.e. a halogen compound containing only fluorine as the halogen such as $CF_4$, $C_2F_6$, and the like, has a strong intramolecular force based on the nature of fluorine having a high electronegativity, and a poor reactivity. The object gas is scarcely reacted and decomposed with oxygen, but it can be decomposed with a high decomposition rate by addition of $H_2O$.

The fluorine compounds, which are objects of the present invention, contain only fluorine as the halogen. Constituent elements of the compounds may be fluorine, carbon, oxygen, sulfur, nitrogen, and hydrogen. Examples of the compounds are $CF_4$, $CHF_3$, $CH_2F_2$, $CH_3F$, $C_2F_6$, $C_2HF_5$, $C_2H_2F_4$, $C_2H_3F_3$, $C_2H_4F_2$, $C_2H_5F$, $C_3F_8$, $CH_3OCF_2CF_3$, $C_4F_8$, $C_5F_8$, $SF_6$, $NF_3$, and the like.

The method of treatment for decomposing the fluorine compounds of the present invention uses a catalyst containing Al. The Al is used in a form of an oxide. Al can be used as a complex with at least one component selected from the group consisting of Zn, Ni, Ti, Fe, Sn, Pt, Co, Zr, Ce, and Si. The decomposing activity of the catalyst can be enhanced by adding S to these catalysts.

Necessary characteristics for the catalytic performance are a high decomposition rate and a long catalytic life. After investigating in detail for a catalyst having the above performance, it was found that a single body composed of only $Al_2O_3$ could have a high decomposition performance depending on its kind of raw material.

A higher decomposition rate can be obtained by using a catalyst, which contains $Al_2O_3$ and a complex oxide of Zn and/or Ni with Al. In accordance with these catalyst, an atomic ratio of Al : M (where, M is at least one of Zn, Ni) is desirably in the range of 50 - 99 mol % for Al, and 50 - 1 mol % for M. A high decomposition rate can be obtained by selecting the amount of the additive component other than Al in the range indicated above.

In order to obtain a long catalytic life, suppressing crystallization of the $Al_2O_3$ in the catalyst is effective, and forming a complex oxide of Al such as $NiAl_2O_4$, $ZnAl_2O_4$, and the like by added metallic components such as Ni, Zn, and the like is desirable. As one of the methods for improving the catalytic performance, a method to add S to the catalyst is known. As a method for adding the S, various methods such as using a sulfuric acid salt, or sulfuric acid, when manufacturing the catalyst can be used. The S in the catalyst exists in a form of $SO_4$ ions and the like, and operates to enhance an acidic property of the catalyst. The amount of S is desirably in the range of 0.1 - 20 % by weight.

In accordance with the method of an embodiment of the present invention, oxygen can be added into the gas flow containing the fluorine compound such as $CF_4$, $C_2F_6$, and the like. The oxygen can be used for an oxidation reaction of CO and the like in the decomposition gas.

Representative reactions of the fluorine compound decomposing reaction are as follows:

$$CF_4 + 2H_2O \rightarrow CO_2 + 4HF \tag{Eq.1}$$

$$C_2F_6 + 3H_2O \rightarrow CO + CO_2 + 6HF \tag{Eq.2}$$

$$CHF_3 + H_2O \rightarrow CO + 3HF \tag{Eq.3}$$

$$SF_6 + 3H_2O \rightarrow SO_3 + 6HF \tag{Eq.4}$$

$$NF_3 + 3/2H_2O \rightarrow NO + 1/2O_2 + 3HF \tag{Eq.5}$$

In accordance with the reactions expressed by the Eq. 1 and Eq. 2, CO is generated. However, the catalyst of the present invention has CO oxidizing performance, and if oxygen exists, CO can be oxidized to $CO_2$.

The amount of added steam is required to be controlled so as to generate hydrogen atoms in an amount of at least equivalent to the number of F in the fluorine compound to be treated. Accordingly, fluorine in the compound can be converted to hydrogen fluoride, and a condition which facilitates post-treatment can be generated.

The reaction temperature for hydrolyzing the fluorine compound is desirably in the range of approximately 200 - 800 °C. The range of approximately 500 - 800 °C is desirable as the reaction temperature for treating the fluorine compound, which is composed of at least carbon, fluorine, and hydrogen. If a temperature higher than the above range is used, a higher decomposition rate can be achieved, but rapid deterioration of the catalyst is caused. Furthermore, the corrosion velocity of the apparatus material is increased rapidly. On the contrary, if a temperature lower than the above range is used, the decomposition rate is low.

When contacting the gas flow containing the fluorine compound, which contains only fluorine as the halogen, and any element selected from the group consisting of carbon, sulfur, and nitrogen, with the catalyst of the present invention, the content of the fluorine compound in the gas flow is desirably in the range of 0.1 - 10 % by volume, and preferably 0.1 - 3 % by volume. The space velocity is desirably in the range of 100 per hour - 10,000 per hour, and preferably 100 per hour - 3,000 per hour. Where, the space velocity is defined by the following equation.

$$\text{Space velocity (h}^{-1}) = \text{Flow rate of the reacting gas (ml/h)/the amount of catalyst (ml)}$$

In accordance with the method of treatment for decomposing fluorine compounds of an embodiment of the present invention, hydrogen fluoride, carbon dioxide, and the others are generated as decomposition products. Additionally, sulfur oxides such as $SO_2$, $SO_3$, and the like, and nitrogen oxides such as NO, $NO_2$, and the like, are generated in some cases. In order to neutralize and eliminate these products, a method of scrubbing the decomposed gas by spraying an aqueous alkaline solution is desirable, because blocking of the pipe with precipitated crystal can then hardly occur. Any one of other methods of bubbling the decomposed gas into an alkaline solution, and of scrubbing the decomposed gas using a packed column can be used. Alkaline solid bodies can also be used. As the alkaline material, any of aqueous solution or slurry of calcium hydroxide, sodium hydroxide, and conventional alkaline reagents can be used.

As a raw material of Al for manufacturing the catalyst of the present invention, any of γ-alumina, a mixture of γ-alumina and δ-alumina, and the like can be used. Particularly, a catalyst manufactured by using boehmite as the raw material for Al, and forming the oxide by calcining has a high decomposition activity.

As raw materials of various metallic components for manufacturing the catalyst of the present invention, nitrate, sulfate, ammonium salt, chloride, and the like of the metals can be used. Nickel nitrate, nickel sulfate, and the like can be used as a raw material of Ni. Hydrates of these compounds can be used. Titanium sulfate, titania sol, and the like can be used as raw materials of Ti.

Any of the conventional methods for manufacturing catalyst such as precipitation method, impregnation method, kneading method, and the like, can be used for manufacturing the catalyst of the present invention.

The catalyst of the present invention can be used by forming a shape of granule, honey-comb, and the like. Any of extrusion method, pelletizing method, roller granulating method, and the like can be used arbitrarily depending on the object. The catalyst of the present invention can also be used by being coated onto a honeycomb, a plate, or the like, which are made of ceramics or metal.

Any of conventional fixed bed, moving bed, or fluidized bed can be used as a reactor for performing the method of the present invention. However, because corrosive gases such as HF and the like are generated as the decomposition gas, the reactor must be composed of materials, which are corrosion resistant against these corrosive gases.

An embodiment of a treating apparatus for performing the method of the present invention comprises: in addition to the above reactor, means for controlling the concentration of the fluorine compound in the gas flow, for instance, means for supplying nitrogen, air, or oxygen to the gas flow, means for heating at least one of the gas flow and the catalyst in order to contact them with each other at a temperature in the range of 200 - 800 °C, means for adding steam for decomposing the fluorine compound to the gas flow, and an exhaust gas scrubber for neutralizing a part of carbon dioxide, a part of sulfur oxides such as $SO_2$, $SO_3$, and the like, and a part of nitrogen oxides such as NO, $NO_2$, and hydrogen fluoride in the decomposition products by scrubbing the decomposition products, which have been generated by contacting the gas flow with the catalyst filled in the reactor, with an alkaline solution. Furthermore, means for adsorbing carbon monoxide, sulfur oxide, nitrogen oxide, which have not been absorbed by alkaline scrubbing, by an adsorbent, and the like, is preferably provided after the exhaust gas scrubber.

The method of treatment for decomposing the gas containing fluorine compounds of the present invention can be applied to previously installed semiconductor plants. The semiconductor plant has generally an exhaust gas treating apparatus for acidic component gas. The fluorine compound can be decomposed by utilizing the exhaust gas treating apparatus by the steps of: providing only the catalyst of the present invention into the exhaust gas line for the fluorine compound such as $CF_4$, adding steam, and heating the gas flow.

In accordance with an embodiment of the present invention, the whole apparatus, or a part of the apparatus is loaded onto a truck or the like, the truck moves to the place where a cylinder containing the fluorine compound is stored, the fluorine compound is taken out from the cylinder, and the fluorine compound taken out from the cylinder can be treated directly by the apparatus. A circulating pump for circulating the scrubbing solution in the exhaust gas scrubber, and the exhaust gas adsorption column for adsorbing gases such as carbon monoxide in the exhaust gas can be loaded simultaneously. Furthermore, a generator can be loaded.

The method of treatment for decomposing the fluorine compound of embodiments of the present invention can decompose the halogen compound at a lower temperature, and accordingly, the operation cost can be reduced.

When the gas containing fluorine compound is treated, corrosion of the apparatus materials by acidic components such as HF, which are generated by the decomposition is a problem to be solved. However, in accordance with the embodiments of the present invention, the corrosion velocity is slow due to the low operating temperature. Therefore, the frequency of necessary maintenance of the apparatus can be reduced.

The method of treatment for decomposing the fluorine compound of an embodiment of the present invention comprises a catalytic reaction step for decomposing the fluorine compound, and an exhaust gas scrubbing step for neutralizing and eliminating the acidic component in the gas generated by the decomposition. Therefore, the size of the apparatus can be reduced.

Because the decomposition reaction of the fluorine compound is with steam, the method of treatment for decomposing the fluorine compounds is highly safe, and a danger for explosion, which will be encountered when combustible gas is used, can be eliminated.

BRIEF DESCRIPTION OF THE DRAWINGS

FIG. 1 is a flow sheet indicating the treating process of embodiment 1 of the present invention,
FIG. 2 is a graph indicating performance of respective catalysts of embodiment 1 of the present invention,
FIG. 3 is a graph indicating performance of respective catalysts of embodiment 2 of the present invention,
FIG. 4 is a graph indicating performance of respective catalysts of embodiment 3 of the present invention,
FIG. 5 is a graph indicating performance of respective catalysts of embodiment 4 of the present invention, and
FIG. 6 is a graph indicating performance of respective catalysts of embodiment 5 of the present invention,
FIG. 7 is a graph indicating results of decomposition reactions of $SF_6$, and $C_3F_8$,
FIG. 8 is a graph indicating results of decomposition reactions of $CF_4$, $C_4F_8$, and $CHF_3$, and
FIG. 9 is a schematic illustration indicating an embodiment of the apparatus for treating fluorine compound of the present invention.

DESCRIPTION OF THE PREFERRED EMBODIMENTS

Hereinafter, the present invention is explained in details with preferred embodiments. The present invention is not restricted to only the embodiments.

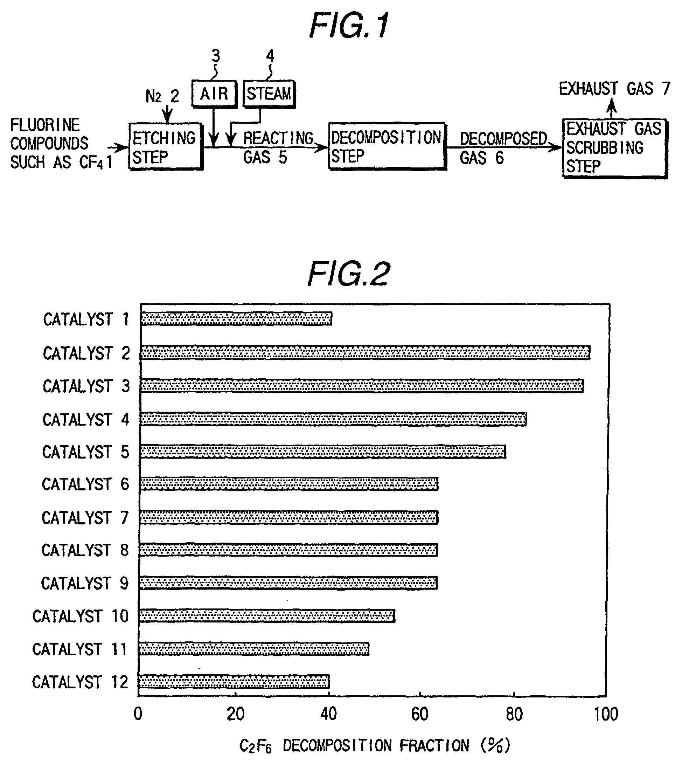

FIG. 1 indicates an example of a flow sheet of the treating process for decomposing halogen compounds used in a semiconductor etching process.

In accordance with the etching process, a halogen compound 1 such as $CF_4$, and the like, is charged into a reduced pressure etching chamber, excited with plasma for 20 minutes, and reacted with semiconductors. Subsequently, the atmosphere in the chamber is replaced with $N_2$ 2 to dilute the concentration of the halogen compound to a few %, and released as an exhaust gas by a velocity of approximately 10 liter/min.

Air was added by the gas adder 3 to the exhaust gas to dilute the fluorine compound such as $CF_4$, and the like. At this time, nitrogen can be added to dilute the fluorine compound. Furthermore, both nitrogen and oxygen can be added to dilute the fluorine compound. A reacting gas 5, which is obtained by adding steam by the steam adder 4 to the diluted exhaust gas, is transferred to the decomposition step. The decomposition step is performed at the reactor filled with catalyst. The concentration of the fluorine compound in the reacting gas is approximately 0.5 - 1 Vol-%.

In the decomposition step, the reacting gas is contacted with a catalyst comprising Al at a temperature in the range of approximately 200 - 800 °C under a condition of space velocity 1, 000 per hour ( where, space velocity ($h^{-1}$) = flow rate of reacting gas (m1/h) /the amount of catalyst (ml)). In this case, the reacting gas may be heated, or the catalyst may be heated by an electric oven and the like. The decomposed gas 6 is transferred to the exhaust gas scrubbing step. In the exhaust gas scrubbing step, an alkaline solution is sprayed in the decomposed gas 6, and an exhaust gas 7, which is obtained by eliminating acidic components in the decomposed gas, is released to outside the treating system. The decomposition rate of the halogen compound such as $CF_4$, and the like is obtained by analyzing the reacting gas 5 and the exhaust gas 7 with FID (Flame Ionization Detector) gas chromatography, and TCD (Thermal Conductivity Detector) gas chromatography, and calculating mass balances at inlet and outlet of the treating system.

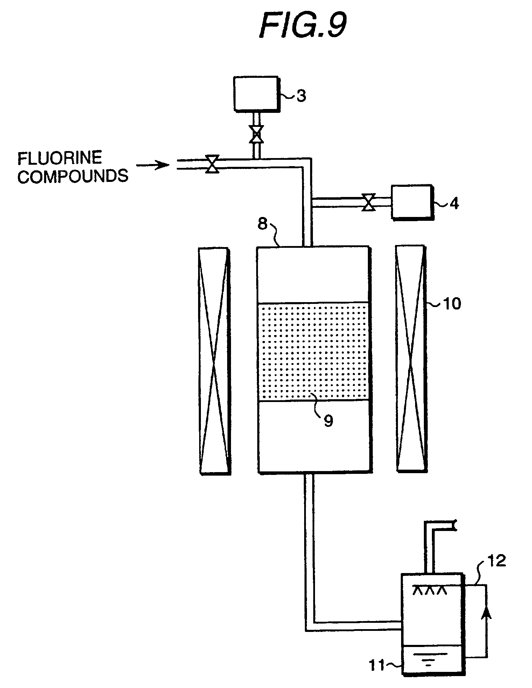

FIG. 9 is a schematic illustration indicating an example of the treating apparatus of the present invention. The reactor 8 is filled with catalyst 9 comprising Al, and the whole body of the reactor can be heated by the heater 10. At a rear stage of the reactor 8, the exhaust gas scrubber 11 having means for spraying 12 an aqueous alkali solution is provided.

(Embodiment 1)

The present embodiment is an example of studying the activities of various fluorine compound decomposing catalysts.

Air was added to $C_2H_6$ gas of at least 99 % pure to dilute the gas. Steam was further added to the diluted gas. The steam was obtained by supplying pure water to upper portion of a reactor with a microtube pump by approximately 0.2 ml/min. and vaporizing the pure water. The concentration of $C_2H_6$ in reacting gas was approximately 0.5 %. The reacting gas was contacted with a catalyst, which had been heated at a designated temperature from outside the reactor by an electric oven, under a space velocity of 2,000 per hour.

The reactor was a reacting tube made of Inconel, of which inner diameter was 32 mm, having a catalyst layer at the middle portion of the reactor. A thermocouple protecting sheath made of Inconel, of which outer diameter was 3 mm, was provided in the catalyst layer. The decomposition generated gas passed through the catalyst layer was bubbled into a calcium fluoride aqueous solution, and subsequently, released outside the system. The decomposition rate of $C_2H_6$ was calculated from the analytical result of FID gas chromatography and TCD gaschromatography by the following equation (math. 1).

$$\text{Decomposition rate}$$

$$= 1\text{-(amount of halogen compound at outlet/amount of}$$

$$\text{supplied halogen compound)} \times 100 \ (\%) \qquad \text{(math. 1)}$$

Hereinafter, methods for preparing respective of catalyst examined in the present embodiment under the above condition are explained.

Catalyst 1;

Commercial boehmite powder was dried at 120 °C for 2 hours. The dried powder 200 g was calcined at 300 °C for 0.5 hour, and subsequently, the calcining temperature was raised to 700 °C and calcined for 2 hours. The obtained powder was filled into a die, and fabricated by pressurizing with a pressure of 49 MPa (500 kgf/cm$^2$). The fabricated bodies were pulverized and sieved to obtain granules having a diameter in the range of 0.5 - 1 mm. The granules were used in the examination. The catalyst after finishing the above treatment was mainly composed of $Al_2O_3$.

Catalyst 2;

Commercial boehmite powder was dried at 120 °C for 1 hour. An aqueous solution dissolving 85.38 g of zinc nitrate hexahydrate was added to 200 g of the dried powder, and kneaded. After kneading, the mixture was dried at a temperature in the range of 250 - 300°C for approximately 2 hours, and subsequently, calcined at 700 °C for 2 hours. The obtained calcined bodies were pulverized and sieved to obtain granules having a diameter in the range of 0.5 - 1 mm. The granules were used in the examination. The catalyst composition after finishing the above treatment was Al : Zn = 91 : 9 (mol%) by an atomic ratio. The present catalyst contains a complex oxide of $ZnAl_2O_4$ in addition to Al oxides and Zn oxides.

Catalyst 3;

Commercial boehmite powder was dried at 120 °C for 1 hour. An aqueous solution dissolving 50.99 g of nickel sulfate hexahydrate was added to 200 g of the dried powder, and kneaded. After kneading, the mixture was dried at a temperature in the range of 250 - 300°C for approximately 2 hours, and subsequently, calcined at 700 °C for 2 hours. The obtained calcined bodies were pulverized and sieved to obtain granules having a diameter in the range of 0.5 - 1 mm. The granules were used in the examination. The catalyst composition after finishing the above treatment was Al : Ni = 91 : 9 (mol%) by an atomic ratio. The present catalyst contains Al oxides, Ni oxides, a complex oxide of $NiAl_2O_4$, and S oxides.

Catalyst 4;

Commercial boehmite powder was dried at 120 °C for 1 hour. An aqueous solution dissolving 125.04 g of nickel nitrate hexahydrate was added to 300 g of the dried powder, and kneaded. After kneading, the mixture was dried at a temperature in the range of 250 - 300°C for approximately 2 hours, and subsequently, calcined at 700 °C for 2 hours. The obtained calcined bodies were pulverized and sieved to obtain granules having a diameter in the range of 0.5 - 1 mm. The granules were used in the examination. The catalyst composition after finishing the above treatment was Al : Ni = 91 : 9 (mol%) by an atomic ratio. The present catalyst contains Al oxides, Ni oxides, and a complex oxide of $NiAl_2O_4$.

Catalyst 5;

Commercial boehmite powder was dried at 120 °C for 1 hour. The dried powder 300 g and a 30 % titanium sulfate aqueous solution 354.4 g were mixed and kneaded with adding approximately 300 g of pure water. After kneading, the mixture was dried at a temperature in the range of 250 - 300°C for approximately 5 hours, and subsequently, calcined at 700 °C for 2 hours. The obtained calcined bodies were pulverized and sieved to obtain granules having a diameter in the range of 0.5 - 1 mm. The granules were used in the examination. The catalyst composition after finishing the above treatment was Al : Ti = 91 : 9 (mol%) by an atomic ratio.

Catalyst 6;

Commercial boehmite powder was dried at 120 °C for 1 hour. An aqueous solution dissolving 115.95 g of iron nitrate hexahydrate was added to 200 g of the dried powder, and kneaded. After kneading, the mixture was dried at a temperature in the range of 250 - 300°C for approximately 2 hours, and subsequently, calcined at 700 °C for 2 hours. The obtained calcined bodies were pulverized and sieved to obtain granules having a diameter in the range of 0.5 - 1 mm. The granules were used in the examination. The catalyst composition after finishing the above treatment was Al : Fe = 91 : 9 (mol%) by an atomic ratio.

Catalyst 7;

Commercial boehmite powder was dried at 120 °C for 1 hour. An aqueous solution dissolving 95.43 g of stannic chloride hydrate was added to 200 g of the dried powder, and kneaded. After kneading, the mixture was dried at a temperature in the range of 250 - 300°C for approximately 2 hours, and subsequently, calcined at 700 °C for 2 hours. The obtained calcined bodies were pulverized and sieved to obtain granules having a diameter in the range of 0.5 - 1 mm. The granules were used in the examination. The catalyst composition after finishing the above treatment was Al : Sn = 91 : 9 (mol%) by an atomic ratio.

Catalyst 8;

Commercial boehmite powder was dried at 120 °C for 1 hour. An aqueous solution obtained by diluting 22.2 g of dinitrodiamine Pt (II) nitric acid solution (Pt concentration was 4.5 % by weight) with 200 ml of pure water was added to 200 g of the dried powder, and kneaded. After kneading, the mixture was dried at a temperature in the range of 250 - 300°C for approximately 2 hours, and subsequently, calcined at 700 °C for 2 hours. The obtained calcined bodies were pulverized and sieved to obtain granules having a diameter in the range of 0.5 - 1 mm. The granules were used in the examination. The catalyst after finishing the above treatment contained Pt by 0. 68 % by weight to 100 % by weight of $Al_2O_3$.

Catalyst 9;

Commercial boehmite powder was dried at 120 °C for 1 hour. An aqueous solution dissolving 125.87 g of cobalt nitrate hexahydrate was added to 300 g of the dried powder, and kneaded. After kneading, the mixture was dried at a temperature in the range of 250 - 300°C for approximately 2 hours, and subsequently, calcined at 700 °C for 2 hours. The obtained calcined bodies were pulverized and sieved to obtain granules having a diameter in the range of 0.5 - 1 mm. The granules were used in the examination. The catalyst composition after finishing the above treatment was Al : Co = 91 : 9 (mol%) by an atomic ratio.

Catalyst 10;

Commercial boehmite powder was dried at 120 °C for 1 hour. An aqueous solution dissolving 76.70 g of zirconyl nitrate dihydrate was added to 200 g of the dried powder, and kneaded. After kneading, the mixture was dried at a temperature in the range of 250 - 300°C for approximately 2 hours, and subsequently, calcined at 700 °C for 2 hours. The obtained calcined bodies were pulverized and sieved to obtain granules having a diameter in the range of 0.5 - 1 mm. The granules were used in the examination. The catalyst composition after finishing the above treatment was Al : Zr = 91 : 9 (mol%) by an atomic ratio.

Catalyst 11;

Commercial boehmite powder was dried at 120 °C for 1 hour. An aqueous solution dissolving 124.62 g of cerium nitrate hexahydrate was added to 300 g of the dried powder, and kneaded. After kneading, the mixture was dried at a temperature in the range of 250 - 300°C for approximately 2 hours, and subsequently, calcined at 700 °C for 2 hours. The obtained calcined bodies were pulverized and sieved to obtain granules having a diameter in the range of 0.5 - 1 mm. The granules were used in the examination. The catalyst composition after finishing the above treatment was Al : Ce = 91 : 9 (mol%) by an atomic ratio.

Catalyst 12;

Commercial boehmite powder was dried at 120 °C for 1 hour. An aqueous solution dissolving 129.19 g of 20% silica sol was added to 300 g of the dried powder, and kneaded. After kneading, the mixture was dried at a temperature in the range of 250 - 300°C for approximately 2 hours, and subsequently, calcined at 700 °C for 2 hours. The obtained calcined bodies were pulverized and sieved to obtain granules having a diameter in the range of 0.5 - 1 mm. The granules were used in the examination. The catalyst composition after finishing the above treatment was Al : Si = 91 : 9 (mol%) by an atomic ratio.

Results of the examination of the above catalysts 1 - 12 at a reacting temperature of 700 °C are indicated in FIG. 2 . The decomposition rates by the catalyst comprising Al and Zn, and the catalyst comprising Al and Ni are significantly higher than others, and the decomposition rate of the catalyst comprising Al and Ti is next high. The reason that the catalyst 3 has a higher activity than the catalyst 4 is supposedly based on the effect of S.

(Embodiment 2)

The present embodiment is a result of examination on activities of catalysts by preparing catalysts, which were obtained by varying the composition of Al and Ni using the same raw materials of Al and Ni as the catalyst 4 in the embodiment 1, and determining their decomposition activities for $C_2F_6$.

Catalyst 4 - 1;

Commercial boehmite powder was dried at 120 °C for 1 hour. An aqueous solution dissolving 8.52 g of nickel nitrate hexahydrate was added to 200 g of the dried powder, and kneaded. After kneading, the mixture was dried at a temperature in the range of 250 - 300°C for approximately 2 hours, and subsequently, calcined at 700 °C for 2 hours. The obtained calcined bodies were pulverized and sieved to obtain granules having a diameter in the range of 0.5 - 1 mm. The granules were used in the examination. The catalyst composition after finishing the above treatment was Al : Ni = 99 : 1 (mol%) by an atomic ratio.

Catalyst 4 - 2;

Commercial boehmite powder was dried at 120 °C for 1 hour. An aqueous solution dissolving 66.59 g of nickel nitrate hexahydrate was added to 300 g of the dried powder, and kneaded. After kneading, the mixture was dried at a temperature in the range of 250 - 300°C for approximately 2 hours, and subsequently, calcined at 700 °C for 2 hours. The obtained calcined bodies were pulverized and sieved to obtain granules having a diameter in the range of 0.5 - 1 mm. The granules were used in the examination. The catalyst composition after finishing the above treatment was Al : Ni = 95 : 5 (mol%) by an atomic ratio.

Catalyst 4 - 3;

Commercial boehmite powder was dried at 120 °C for 1 hour. An aqueous solution dissolving 210.82 g of nickel nitrate hexahydrate was added to 200 g of the dried powder, and kneaded. After kneading, the mixture was dried at a temperature in the range of 250 - 300°C for approximately 2 hours, and subsequently, calcined at 700 °C for 2 hours. The obtained calcined bodies were pulverized and sieved to obtain granules having a diameter in the range of 0.5 - 1 mm. The granules were used in the examination. The catalyst composition after finishing the above treatment was Al : Ni = 80 : 20 (mol%) by an atomic ratio.

Catalyst 4 - 4;

Commercial boehmite powder was dried at 120 °C for 1 hour. An aqueous solution dissolving 361.16 g of nickel nitrate hexahydrate was added to 200 g of the dried powder, and kneaded. After kneading, the mixture was dried at a temperature in the range of 250 - 300°C for approximately 2 hours, and subsequently, calcined at 700 °C for 2 hours. The obtained calcined bodies were pulverized and sieved to obtain granules having a diameter in the range of 0.5 - 1 mm. The granules were used in the examination. The catalyst composition after finishing the above treatment was Al : Ni = 70 : 30 (mol%) by an atomic ratio.

Catalyst 4 - 5;

Commercial boehmite powder was dried at 120 °C for 1 hour. An aqueous solution dissolving 562.1 g of nickel nitrate hexahydrate was added to 200 g of the dried powder, and kneaded. After kneading, the mixture was dried at a temperature in the range of 250 - 300°C for approximately 2 hours, and subsequently, calcined at 700 °C for 2 hours. The obtained calcined bodies were pulverized and sieved to obtain granules having a diameter in the range of 0.5 - 1 mm. The granules were used in the examination. The catalyst composition after finishing the above treatment was Al : Ni = 60 : 40 (mol%) by an atomic ratio.

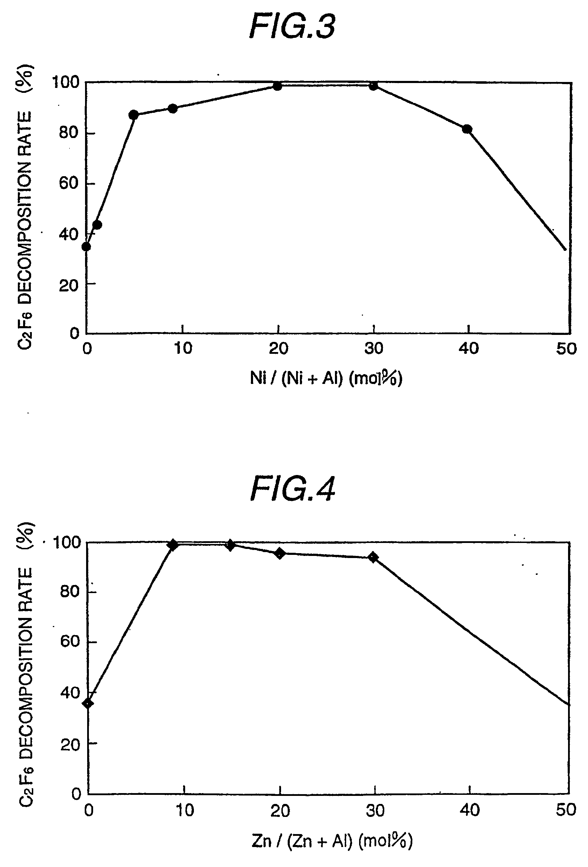

The activities of the above catalysts from the catalyst 4, the catalyst 4 - 1 to the catalyst 4 - 5 were examined by the same method as the embodiment 1 except changing the concentration of $C_2F_6$ to 2 %, and the supplying amount of the pure water to approximately 0.4 ml/min. The decomposition rates at 6 hours elapsed after initiating the examination are indicated in FIG. 3. The highest activity can be obtained when the mol % of Ni/(Ni+Al) is in the range of 20 - 30 mol %, and the activity is next high when the mol % is in the range of 5 - 40 mol %.

(Embodiment 3)

The present embodiment is a result of examination on activities of catalysts by preparing catalysts, which were obtained by varying the composition of Al and Zn using the same raw materials of Al and Zn as the catalyst 2 in the embodiment 1, and determining their activities.

Catalyst 2 - 1;

Commercial boehmite powder was dried at 120 °C for 1 hour. An aqueous solution dissolving 215.68 g of zinc nitrate hexahydrate was added to 200 g of the dried powder, and kneaded. After kneading, the mixture was dried at a temperature in the range of 250 - 300°C for approximately 2 hours, and subsequently, calcined at 700 °C for 2 hours. The obtained calcined bodies were pulverized and sieved to obtain granules having a diameter in the range of 0.5 - 1 mm. The granules were used in the examination. The catalyst composition after finishing the above treatment was Al : Zn = 80 : 20 (mol%) by an atomic ratio.

Catalyst 2 - 2;

Commercial boehmite powder was dried at 120 °C for 1 hour. An aqueous solution dissolving 369.48 g of zinc nitrate hexahydrate was added to 200 g of the dried powder, and kneaded. After kneading, the mixture was dried at a temperature in the range of 250 - 300°C for approximately 2 hours, and subsequently, calcined at 700 °C for 2 hours. The obtained calcined bodies were pulverized and sieved to obtain granules having a diameter in the range of 0.5 - 1 mm. The granules were used in the examination. The catalyst composition after finishing the above treatment was Al : Zn = 70 : 30 (mol%) by an atomic ratio.

Catalyst 2 - 3;

Commercial boehmite powder was dried at 120 °C for 1 hour. An aqueous solution dissolving 96.39 g of zinc nitrate hexahydrate was added to 126.65 g of the dried powder, and kneaded. After kneading, the mixture was dried at a temperature in the range of 250 - 300°C for approximately 2 hours, and subsequently, calcined at 700 °C for 2 hours. The obtained calcined bodies were pulverized and sieved to obtain granules having a diameter in the range of 0.5 - 1 mm. The granules were used in the examination. The catalyst composition after finishing the above treatment was Al : Zn = 85 : 15 (mol%) by an atomic ratio.

The activities of the above catalysts from the catalyst 2, the catalyst 2 - 1 to the catalyst 2 - 3 were examined by the same method as the embodiment 1 except changing the concentration of $C_2F_6$ to 2 %, and the supplying amount of the pure water to approximately 0.4 ml/min. The decomposition rates at 6 hours elapsed after initiating the examination are indicated in FIG. 4. The highest decomposition rate can be obtained when the mol % of Zn/(Zn+Al) is in the range of 10 - 30 mol %.

(Embodiment 4)

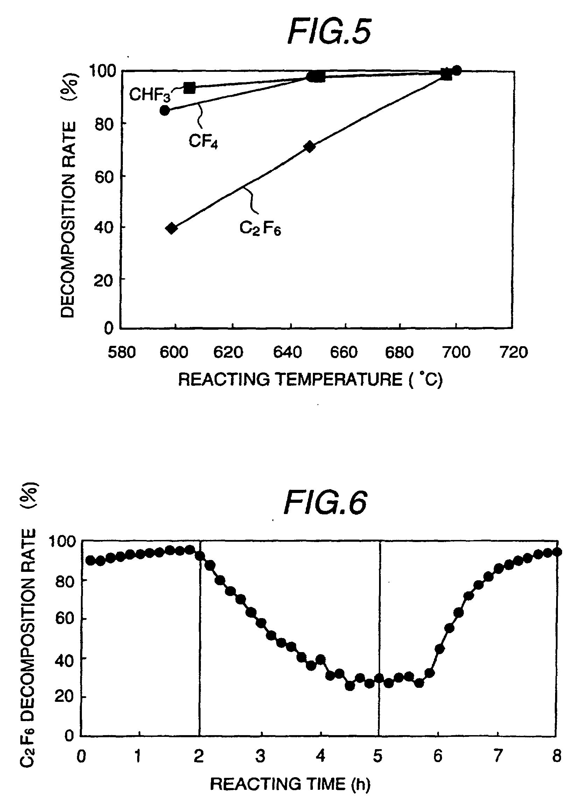

The present embodiment is a result obtained by performing decomposition of $CF_4$, $CHF_3$, and $C_2F_6$ at various reaction temperatures. The condition of the examination was as same as the embodiment 1, except changing the space velocity to 1, 000 per hour, and the halogen compound was diluted with nitrogen instead of air. The catalyst used was the catalyst 4 - 3 in the embodiment 2. The results of the examination at various reacting temperature are indicated in FIG. 5. The catalyst comprising Al and Ni has a high decomposition rate with $CF_4$, and $CHF_3$. These catalyst also have a high activity with the fluorine compounds at a low temperature such as approximately 600 °C.

(Embodiment 5)

The present embodiment is a result obtained by examining the effect of steam in the decomposition of $C_2F_6$. The condition of the examination was as same as the embodiment 1, except changing only the space velocity to 1,000 per hour. The catalyst used was the catalyst 4 in the embodiment 1, and the reacting temperature was 700 °C. In the examination, steam was supplied for 2 hours from the initiation of the reaction, and then, steam supply was stopped. After 5 hours elapsed, the steam supply was resumed. The results of the examination are indicated in FIG. 6. It was revealed that the decomposition rate was increased by adding steam, and the decomposition of $C_2F_6$ was performed by hydrolysis.

(Embodiment 6)

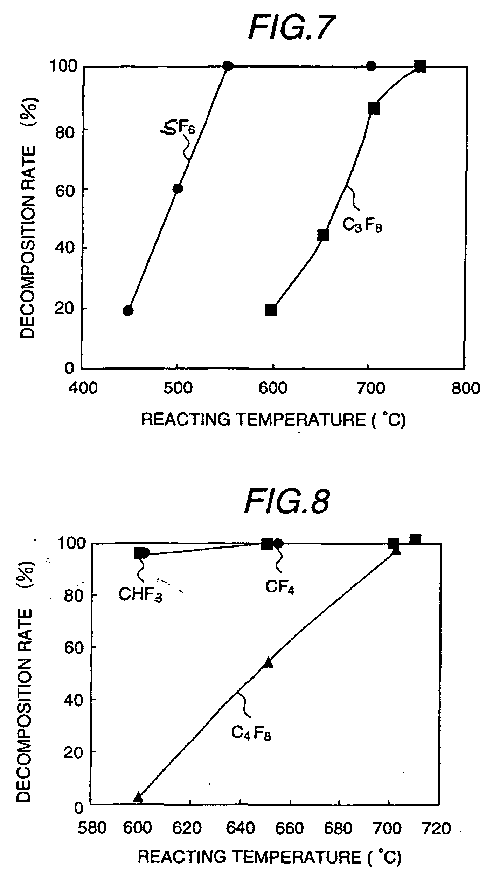

The present embodiment is a result obtained by examining the decomposition of $SF_6$ and $C_3F_8$ using the catalyst 4 - 3 comprising Al and Ni. The condition of the examination of $SF_6$ gas was as same as the embodiment 1, except using $SF_6$ of at least 99 % pure, changing the space velocity to 1,000 per hour, and diluting the $SF_6$ with nitrogen instead of air. The condition of the examination of $C_3F_8$ was as same as the embodiment 1. Results of the examination is indicated in FIG. 7. The decomposition rate was obtained by determining the amount of $SF_6$ in the reacting gas at the inlet of the reactor, and the amount of $SF_6$ in the decomposed gas after passing through the alkaline scrubber with the TCD gaschromatography, and calculating the decomposition rate by the following equation (math. 2). The observed decomposition rate of $SF_6$ at the reacting temperature 550 - 700 °C was at least 99 %. In accordance with the decomposition test of $C_3F_8$ , a high decomposition rate could be obtained at a reacting temperature higher than 700 °C.

$$\text{Decomposition rate} = 1 - (\text{amount of } SF_6 \text{ at the}$$

$$\text{outlet/amount of supplied } SF_6) \times 100 \ (\%) \qquad \text{(math. 2)}$$

(Embodiment 7)

The present embodiment is a result obtained by examining the decomposition of $NF_3$ using the catalyst 4 - 3 comprising Al and Ni. The condition of the examination was as same as the embodiment 6, except using $NF_3$ of at least 99 % pure. The reacting temperature was 700 °C. The decomposition rate was obtained by determining the amount of $NF_3$ in the reacting gas at the inlet of the reactor, and the amount of $NF_3$ in the decomposed gas after passing through the alkaline scrubber with the TCD gaschromatography, and calculating the decomposition rate by the following equation (math. 3). The observed decomposition rate was at least 99 %.

$$\text{Decomposition rate} = 1 - (\text{amount of } NF_3 \text{ at the}$$

$$\text{outlet/amount of supplied NF}_3) \times 100 \; (\%) \qquad\qquad \text{(math. 3)}$$

(Embodiment 8)

The decomposition of $CF_4$, $C_4F_8$, and $CHF_3$ were examined using the catalyst comprising Al and Zn in an atomic ratio of Al:Zn = 85:15 (mol %).

The decomposition of $CF_4$ was examined by the steps of diluting $CF_4$ gas of purity at least 99 % by adding air, further adding steam, and contacting with the catalyst at a designated reacting temperature. The space velocity was 1000 per hour.

The $CF_4$ concentration in the reacting gas was approximately 0.5 %. The flow rate of the steam was controlled to be approximately 50 times of the $CF_4$ gas. The decomposition of $CHF_3$ and $C_4F_8$ were performed by the same as the above.

Results of the examination are indicated in FIG. 8. It was revealed that the catalyst comprising Al and Zn had a high activity with $CHF_3$ and $CF_4$,, and the catalyst indicated a high decomposition activity with $C_4F_8$ when the reacting temperature was increased to approximately 700 °C or higher.

In accordance with the present invention, halogen compounds which contain only fluorine as the halogen such as $CF_4$, $C_2F_6$, and the like can be treated for decomposing effectively.

**Claims**

1.  A method of decomposing fluorine compounds, wherein

    a gas flow containing said fluorine compounds is brought into contact with a catalyst in the presence of steam at a temperature in the range of 200 to 800°C to decompose the fluorine compounds to hydrogen fluoride,

    said fluorine compounds comprise a compound of fluorine and carbon, a compound of fluorine, carbon and hydrogen, a compound of fluorine, carbon, hydrogen and oxygen, a compound of fluorine and nitrogen and/or a compound of fluorine and sulphur, and

    said catalyst contains aluminium oxide,

    **characterised in that** said catalyst further contains a complex oxide compound of Al and Ni, and/or a complex oxide compound of Al and Zn.

2.  The method of claim 1, wherein said fluorine compounds are perfluoro compounds consisting of e.g. $CF_4$, $CHF_3$, $C_2F_6$, $C_3F_8$, $C_4F_8$, $C_5F_8$, $SF_6$ and/or $NF_3$.

3.  The method of claim 1 or 2, wherein a gas flow containing said hydrogen fluoride after contact with the catalyst is neutralised by scrubbing with an aqueous alkali solution.

4.  The method of any preceding claim, wherein said catalyst further contains S, preferably in the range of 0.1 to 20% by weight.

5.  The method of any preceding claim, wherein said aluminium oxide is produced by calcination of boehmite powder as a raw material.

6.  The method of any preceding claim, wherein said complex oxide compound consists of two components: Al and Ni.

7.  The method of claim 6, wherein the catalyst has a Ni/(Ni + Al) ratio in the range of 5 - 40 mol %.

8.  The method of claim 6 or 7, wherein said complex oxide compound is $NiAl_2O_4$.

9.  The method of any of claims 1 to 5, wherein the complex oxide compound consists of two components: Al and Zn.

10. The method of claim 9, wherein the catalyst has a Zn/(Zn + Al) ratio in the range of 10 - 30 mol %.

11. The method of claim 9 or 10, wherein said complex oxide compound is $ZnAl_2O_4$.

12. The method of any preceding claim, further including a step of adding oxygen to said gas flow.

13. Use of a catalyst for decomposing fluorine compounds, the catalyst comprising aluminium oxide and a complex oxide compound of Al and Ni or Zn.

14. An apparatus for decomposing fluorine compounds in accordance with the method of any of claims 1 to 12, comprising

a reactor (8) filled with a catalyst (9) according to claim 13,

a steam adder (4) for adding steam to a gas flow containing said fluorine compounds, and supplying the gas flow with said steam to said reactor (8), and

a heater (10) for heating said catalyst (9) and/or said gas flow supplied to said reactor to a temperature in the range of 200 ~ 800°C.

15. The apparatus of claim 14, comprising means (3) for adding oxygen to said gas flow supplied to said reactor (8).

16. The apparatus of claim 14 or 15, comprising an exhaust gas scrubber (11, 12) for scrubbing the gas flow discharged from said reactor (8) with an aqueous alkali solution.

**Patentansprüche**

1. Verfahren zum Zersetzen von Fluorverbindungen, wobei

eine Fluorverbindungen enthaltende Gasströmung unter Vorhandensein von Dampf bei einer Temperatur zwischen 200 und 800°C in Kontakt mit einem Katalysator gebracht wird, um die Fluorverbindungen in Fluorwasserstoff zu zersetzen,

die Fluorverbindungen eine Verbindung von Fluor und Kohlenstoff, eine Verbindung von Fluor, Kohlenstoff und Wasserstoff, eine Verbindung von Fluor, Kohlenstoff, Wasserstoff und Sauerstoff, eine Verbindung von Fluor und Stickstoff und/oder eine Verbindung von Fluor und Schwefel enthalten, und

der Katalysator Aluminiumoxid enthält,

**dadurch gekennzeichnet, daß** der Katalysator ferner eine komplexe Oxidverbindung von Al und Ni und/ oder eine komplexe Oxidverbindung von Al und Zn enthält.

2. Verfahren nach Anspruch 1, wobei die Fluorverbindungen Perfluorverbindungen darstellen, die beispielsweise aus $CF_4$, $CHF_3$, $C_2F_6$, $C_3F_8$, $C_4F_8$, $C_5F_8$, $SF_6$ und/oder $NF_3$ bestehen.

3. Verfahren nach Anspruch 1 oder 2, wobei eine Gasströmung, die nach dem Kontakt mit dem Katalysator Fluorwasserstoff enthält, durch Reinigen mit einer wäßrigen Alkalilösung neutralisiert wird.

4. Verfahren nach einem der vorstehenden Ansprüche, wobei der Katalysator ferner S enthält, vorzugsweise in einem Bereich zwischen 0,1 und 20 Gew-%.

5. Verfahren nach einem der vorstehenden Ansprüche, wobei das Aluminiumoxid durch Kalzinieren von Boehmitpulver als Rohmaterial hergestellt wird.

6. Verfahren nach einem der vorstehenden Ansprüche, wobei die komplexe Oxidverbindung aus zwei Komponenten besteht: Al und Ni.

7. Verfahren nach Anspruch 6, wobei der Katalysator ein Ni/(Ni+Al)-Verhältnis im Bereich zwischen 5 und 40 Mol-% aufweist.

8. Verfahren nach Anspruch 6 oder 7, wobei die komplexe Oxidverbindung $NiAl_2O_4$ ist.

9. Verfahren nach einem der Ansprüche 1 bis 5, wobei die komplexe Oxidverbindung aus zwei Komponenten besteht: Al und Zn.

10. Verfahren nach Anspruch 9, wobei der Katalysator ein Zn/(Zn+Al)-Verhältnis im Bereich zwischen 10 und 30 Mol-% aufweist.

11. Verfahren nach Anspruch 9 oder 10, wobei die komplexe Oxidverbindung $ZnAl_2O_4$ ist.

**12.** Verfahren nach einem der vorstehenden Ansprüche, wobei ferner Sauerstoff zu der Gasströmung zugegeben wird.

**13.** Verwendung eines Katalysators zum Zersetzen von Fluorverbindungen, wobei der Katalysator Aluminiumoxid und eine komplexe Oxidverbindung aus Al und Ni oder Zn enthält.

**14.** Gerät zum Zersetzen von Fluorverbindungen gemäß dem Verfahren nach einem der Ansprüche 1 bis 12, mit
einem mit einem Katalysator (9) gemäß Anspruch 13 befüllten Reaktionsgefäß (8),
einem Dampfzugeber (4) zum Zugeben von Dampf zu einer die Fluorverbindungen enthaltenden Gasströmung und zum Zuführen der Gasströmung mit dem Dampf zu dem Reaktionsgefäß (8), und
einem Heizelement (10) zum Heizen des Katalysators (9) und/oder der zu dem Reaktionsgefäß zugeführten Gasströmung auf eine Temperatur im Bereich zwischen 200 und 800°C.

**15.** Gerät nach Anspruch 14, mit einer Einrichtung (3) zum Zugeben von Sauerstoff zu der zu dem Reaktionsgefäß (8) zugeführten Gasströmung.

**16.** Gerät nach Anspruch 14 oder 15, mit einem Abgasreiniger (11, 12) zum Reinigen der aus dem Reaktionsgefäß (8) ausgegebenen Gasströmung mit einer wäßrigen Alkalilösung.

**Revendications**

**1.** Procédé pour décomposer des composés de fluor, dans lequel
un écoulement gazeux contenant lesdits composés de fluor est amené en contact avec un catalyseur en présence d'une vapeur à une température dans la plage de 200 à 800°C pour décomposer les composés de fluor en fluorure d'hydrogène,
lesdits composés de fluor comportent un composé de fluor et de carbone, un composé de fluor, de carbone et d'hydrogène, un composé de fluor, de carbone, d'hydrogène et d'oxygène, un composé de fluor et d'azote et/ou un composé de fluor et de soufre, et
ledit catalyseur contient de l'oxyde d'aluminium,
**caractérisé en ce que** ledit catalyseur contient de plus un composé d'oxyde complexe constitué de Al et Ni, et/ou un composé d'oxyde complexe constitué de Al et Zn.

**2.** Procédé selon la revendication 1, dans lequel lesdits composés de fluor sont des composés perfluoro constitués, par exemple, de $CF_4$, $CHF_3$, $C_2F_6$, $C_3F_8$, $C_4F_8$, $C_5F_8$, $SF_6$ et/ou $NF_3$.

**3.** Procédé selon la revendication 1 ou 2, dans lequel un écoulement gazeux contenant ledit fluorure d'hydrogène après contact avec le catalyseur est neutralisé par épuration à l'aide d'une solution alcaline aqueuse.

**4.** Procédé selon l'une quelconque des revendications précédentes, dans lequel ledit catalyseur contient de plus S, de préférence dans la plage de 0,1 à 20 % en poids.

**5.** Procédé selon l'une quelconque des revendications précédentes, dans lequel ledit oxyde d'aluminium est produit par calcination d'une poudre de boehmite en tant que matériau brut.

**6.** Procédé selon l'une quelconque des revendications précédentes, dans lequel ledit composé d'oxyde complexe est constitué de deux composants : Al et Ni.

**7.** Procédé selon la revendication 6, dans lequel le catalyseur a un rapport Ni/(Ni + Al) dans la plage de 5 à 40 % en mole.

**8.** Procédé selon la revendication 6 ou 7, dans lequel ledit composé d'oxyde complexe est $NiAl_2O_4$.

**9.** Procédé selon l'une quelconque des revendications 1 à 5, dans lequel le composé d'oxyde complexe est constitué de deux composants : Al et Zn.

**10.** Procédé selon la revendication 9, dans lequel le catalyseur a un rapport Zn/(Zn + Al) dans la plage de 10 à 30 % en mole.

11. Procédé selon la revendication 9 ou 10, dans lequel ledit composé d'oxyde complexe est $ZnAl_2O_4$.

12. Procédé selon l'une quelconque des revendications précédentes, comportant de plus une étape consistant à ajouter de l'oxygène audit écoulement gazeux.

13. Utilisation d'un catalyseur pour décomposer des composés de fluor, le catalyseur comportant de l'oxyde d'aluminium et un composé d'oxyde complexe de Al et Ni ou Zn.

14. Dispositif pour décomposer des composés de fluor conformément au procédé selon l'une quelconque des revendications 1 à 12, comportant
    un réacteur (8) rempli d'un catalyseur (9) selon la revendication 13,
    un dispositif d'ajout de vapeur (4) pour ajouter de la vapeur à un écoulement gazeux contenant lesdits composés de fluor, et alimenter l'écoulement gazeux avec ladite vapeur dans ledit réacteur (8), et
    un dispositif de chauffage (10) pour chauffer ledit catalyseur (9) et/ou ledit écoulement gazeux alimenté dans ledit réacteur jusqu'à une température dans la plage de 200 à 800°C.

15. Dispositif selon la revendication 14, comportant des moyens (3) pour ajouter de l'oxygène audit écoulement gazeux alimenté dans ledit réacteur (8).

16. Dispositif selon la revendication 14 ou 15, comportant un épurateur de gaz d'échappement (11, 12) pour épurer l'écoulement gazeux déchargé depuis ledit réacteur (8) à l'aide d'une solution alcaline aqueuse.

## FIG.1

FLUORINE COMPOUNDS SUCH AS CF₄ 1 → ETCHING STEP → REACTING GAS 5 → DECOMPOSITION STEP → DECOMPOSED GAS 6 → EXHAUST GAS SCRUBBING STEP → EXHAUST GAS 7

N₂ 2 / AIR 3 / STEAM 4

## FIG.2

CATALYST 1
CATALYST 2
CATALYST 3
CATALYST 4
CATALYST 5
CATALYST 6
CATALYST 7
CATALYST 8
CATALYST 9
CATALYST 10
CATALYST 11
CATALYST 12

0    20    40    60    80    100

$C_2F_6$ DECOMPOSITION FRACTION (%)

## FIG.3

## FIG.4

## FIG.5

## FIG.6

## FIG.7

## FIG.8

## FIG.9

FLUORINE
COMPOUNDS →